(19) Europäisches Patentamt
European Patent Office
Office européen des brevets

(11) Publication number: **0 077 493**
**B1**

# (12) EUROPEAN PATENT SPECIFICATION

(45) Date of publication of patent specification: **18.03.87**

(21) Application number: **82109249.1**

(22) Date of filing: **07.10.82**

(51) Int. Cl.$^4$: **C 08 L 81/06,** C 08 L 85/02, C 08 L 33/00 // (C08L81/06, 85:02)

## (54) Polysulfone-polyphosphonate molding compositions.

(30) Priority: **19.10.81 US 312590**

(43) Date of publication of application:
**27.04.83 Bulletin 83/17**

(45) Publication of the grant of the patent:
**18.03.87 Bulletin 87/12**

(84) Designated Contracting States:
**DE FR GB IT**

(56) References cited:
**DE-A-2 458 967**
**US-A-3 719 727**
**US-A-4 065 517**
**US-A-4 096 202**

(73) Proprietor: **MOBAY CORPORATION**
**Penn Lincoln Parkway West**
**Pittsburgh, Pennsylvania 15205 (US)**

(72) Inventor: **Schmidt, Manfred, Dr.**
**Bodelschwinghstrasse 20**
**D-4150 Krefeld 1 (DE)**

(74) Representative: **Gremm, Joachim, Dr. et al**
**Bayer AG c/o Zentralbereich Patente, Marken und Lizenzen**
**D-5090 Leverkusen 1, Bayerwerk (DE)**

**EP 0 077 493 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

FIELD OF THE INVENTION

The present invention relates to flame retardant polyblends and more particularly to blends comprising polysulfone and polyphosphonates.

BACKGROUND OF THE INVENTION

Among the key properties of polysulfones are their ability to withstand long periods of exposure to elevated temperatures in air and in water and their processability by conventional thermoplastic techniques. These and other mechanical and physical properties render these resins exceptionally well suited for applications in hostile environments. One deficiency which tends to limit their use has been their relatively poor flame resistance. The addition of halogen containing flame retarding agents to polysulfones, although improving their flammability rating (UL94, V—O), presents a drawback in that the high temperatures required in the thermoplastic processing of polysulfones may cause a decomposition of the additives and consequential poor properties of the molded part.

Polyphosphonates, characterized by their high level of flame retardance and mechanical properties, have been disclosed in U.S. Patents 2,682,522; 2,716,101; 2,891,915; 3,719,727; 3,919,363; 3,946,093; and 4,046,724; as well as in DAS 1,569,340 and in DOS 2,458,967 and 2,461,658. U.S. Patent 4,065,517 discloses polysulfone-polyarylphosphonate compositions having lesser flame retarding properties than the compositions of the present invention. Especially the phosphonates according US—A—4065517 and 3719727 contain halogen, which may cause problems in case of fire.

It has now been found that a composition comprising polysulfone and certain polyphosphonate exhibits a profile of properties which render it attractive for a host of applications where the selection criteria entails flame resistance and thermal stability.

BRIEF DESCRIPTION OF THE INVENTION

A thermoplastic composition comprising polysulfone and polyphosphonate is provided characterized by its thermal stability and flame resistance. A preferred embodiment additionally comprising an acrylic rubber interpolymer composite is characterized by its improved impact strength. The compositions are particularly suitable as thermoplastic molding compositions.

DETAILED DESCRIPTION OF THE INVENTION

In the context of the present invention thermoplastic polysulfone resins are polymeric materials having a basic structure composed of recurring units of the formula

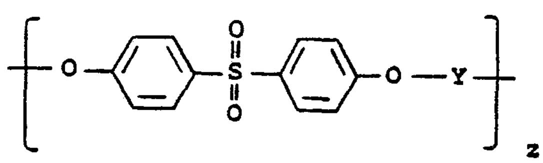

where Y is the radical residuum of a dihydric polynuclear phenol having an aliphatic moiety in its backbone remaining after the removal of both OH groups and z is an integer denoting the degree of polymerization and has a value sufficiently large to afford a normally solid polymer preferably greater than 50 and most preferably from about 50 to about 80. Specific examples of dihydric polynuclear phenols which can be used to provide the Y component include: 2,2-bis(4-hydroxyphenyl)propane; 2,4′-dihydroxydiphenylmethane; bis-(2-hydroxyphenyl)methane; bis-(4-hydroxyphenyl)methane; bis-(4-hydroxy-2,6-dimethyl-3-methoxyphenyl)methane; 1,1-bis-(p-hydroxyphenyl)ethane; 1,2-bis-(4-hydroxyphenyl)ethane; 1,1-bis-(3-methyl-4-hydroxyphenyl)ethane; 1,3-bis-(3-methyl-4-hydroxyphenyl)-propane; 2,2-bis-(3-isopropyl-4-hydroxyphenyl)propane; 2,2-bis-(2-isopropyl-4-hydroxyphenyl)propane; 2,2-bis-(4-hydroxynaphthyl)propane; 2,2-bis-(4-hydroxyphenyl)pentane; 3,3-bis-(4-hydroxyphenyl)pentane; 2,2-bis-(4-hydroxyphenyl)heptane; bis-(4-hydroxyphenyl)phenylmethane; bis-(4-hydroxyphenyl)cyclohexylmethane; 1,2-bis-(4-hydroxyphenyl)-1,2-bis-(phenyl)-propane; 2,2-bis-(4-hydroxyphenyl)-1-phenylpropane; 1,1-bis-(4-hydroxyphenyl)cyclohexane; 4,4-dihydroxydiphenyl sulfone and the like. The preferred polysulfones from the standpoint of both usefulness and availability are those containing the repeating units:

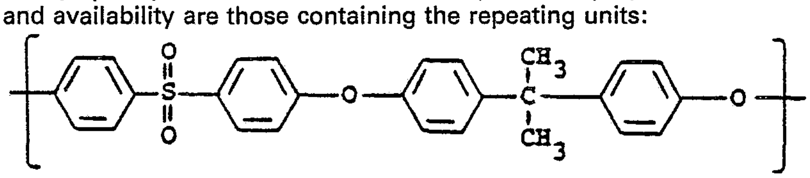

The preparation of polysulfone resins suitable in the practice of the invention is described, inter alia, in U.S. 3,658,938, 4,008,203, 3,948,857, 4,127,713, 4,009,149, 3,708,454, 4,108,837 and 4,094,867 and in the article High Use Temperature Polyarylsulfones by G. T. Kwiatkowski et al in High Performance Plastics, National Technical Conference, SPE 1976, p. 59—61.

Among the preferred polysulfones suitable in the practice of the invention are those available from Union Carbide Corporation under the registered trademark Udel®, for instance Udel® P 1700 and Udel® P 3500 having 50 respectively 80 repeating units of above formula.

The thermoplastic polyphosphonates suitable in the context of the present invention are branched or unbranched aromatic polyphosphonates having a number average molecular weight of from 11,000 to 220,000, preferably from 13,000 to 40,000 (the molecular weights being determined by membrane osmosis using membranes which are permeable to particles having a molecular weight of up to 3,000) and characterized by the recurring structure:

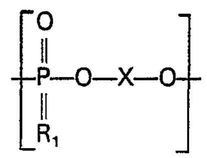

(1)

and in that the terminal members bound to the phosphorus in structure (1) are either of:

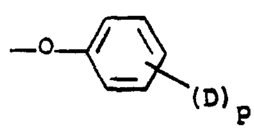 ;

—OH; —O—X—OH

and in that the terminal members bound to the oxygen in structure (1) are any of:

H, 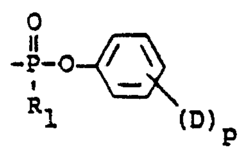 and 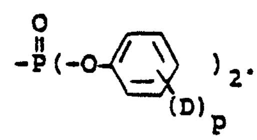.

In the above $R_1$ represents at least one of the radicals: $C_1$—$C_{12}$ alkyl; $C_2$—$C_{12}$ alkenyl; $C_6$—$C_{30}$ cycloalkyl, $C_6$—$C_{30}$ cycloalkenyl, $C_7$—$C_{30}$ arylalkyl or $C_8$—$C_{30}$ arylalkenyl, the aryl group in each case being unsubstituted or substituted by 1 to 5 $C_1$—$C_4$ alkyl groups; X represents at least one of the following radicals:

phenylene 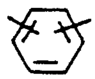

biphenylene 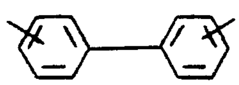

$C_1$—$C_4$ alkylene bis-phenylene 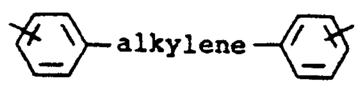

$C_5$—$C_{12}$ cycloalkylene bis-phenylene 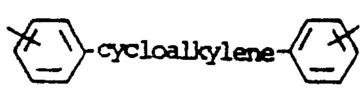

thio-bis-phenylene 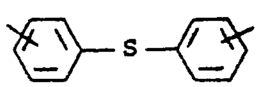

oxy-bis-phenylene 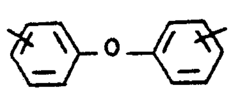

sulfonyl-bis-phenylene 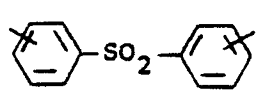

carbonyl-bis-phenylene 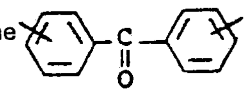 and

naphthylene 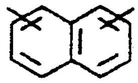

wherein each phenyl nucleus may be unsubstituted or substituted by 1 to 4 $C_1$—$C_4$ alkyl groups and wherein the naphthylene nucleus may be unsubstituted or substituted by 1 to 6 of at least one of the above-mentioned groups or atoms; D represents the same or different groups and represents a $C_1$—$C_4$ alkyl gorup and p = 0 or a number of from 1 to 5, preferably p = 0.

The preferred embodiment is one wherein $R_1$ represents at least one of the radicals methyl or ethyl, particularly methyl; X represents at least one of the radicals phenylene, biphenylene, $C_1$—$C_4$ alkylene bis-phenylene, in which case each phenyl nucleus may be substituted by 1 to 4 methyl groups, cyclohexylene-bis-phenylene, oxy-bis-phenylene, thio-bis-phenylene, sulfonyl-bis-phenylene, particularly $C_1$—$C_4$ alkylene-bis-phenylene, in which case each phenyl nucleus may be substituted by one or two methyl groups; D represents the same or different groups selected from among a $C_1$—$C_4$ alkyl group and p = 0 or a number of from 1 to 5, more particularly p = 0.

In the Examples that follow, percentages are by weight, relative to the weight of the compositions.

## EXAMPLES

### Examples 1—5

In the practice of the invention, a composition comprising 5 to 50 percent of polyphosphonate and 50 to 95 percent, most preferably from 65 to about 95 percent of polysulfone is prepared by blending upon melting, such as by coextrusion. Table 1 summarizes the properties of a series of compositions prepared by coextrusion at 300°C, wherein the polysulfone used was Udel® P—1700 and the polyphosphonate was poly-(4,4′-dioxydiphenyl)-methylphosphonate, having a relative viscosity of 1.404 as measured in a 0.5% solution of $CH_2Cl_2$ at 25°C.

TABLE 1

| | 1 | 2 | 3 | 4 | 5 |
|---|---|---|---|---|---|
| Polysulfone, % wt. | 100.0 | 95.0 | 94.0 | 93.0 | 80.0 |
| Polyphosphonate, % wt. | 0.0 | 5.0 | 6.0 | 7.0 | 20.0 |
| HDT (°C), 1.82 MPa | 172 | 164 | 163 | 162 | 156 |
| UL—94, 1/8", 3,18 mm | failed | V—0 | V—0 | V—0 | V—0 |
| UL—94, 1/16", 1,59 mm | failed | V—1 | V—0 | V—0 | V—0 |
| UL—94, 5V, 1/8", 3,18 mm | failed | failed | passed | passed | passed |
| Impact strength, Izod | | | | | |
| Unnotched, J/m 1/8", 3,18 mm | 1518 | 1542 | 1530 | 1572 | 1432 |
| Unnotched, J/m 1/4", 6,35 mm | 831 | 861 | 835 | 816 | 836 |
| Tensile yield strength, MPa | 72.8 | 74.7 | 74.0 | 73.0 | 75.4 |
| Flexural strength, MPa | 60.5 | 108 | 109 | 110.8 | 67.0 |
| Flexural Modulus, GPa | 2.40 | 2.60 | 2.62 | 2.65 | 2.80 |

### Examples 6—10

Table 2 summarizes the results obtained upon evaluating compositions prepared in accordance with the invention where the polysulfone was Udel® P—3500. Coextrusion was carried out at 310°C and the polyphosphonate was poly-(4,4′-dioxydiphenyl)-methylphosphonate, having a relative viscosity of 1.404 as measured in a 0.5% solution of $CH_2Cl_2$ at 25°C.

TABLE 2

| | 6 | 7 | 8 | 9 | 10 |
|---|---|---|---|---|---|
| Polysulfone, % wt. | 100.0 | 95.0 | 94.0 | 92.0 | 90.0 |
| Polyphosphonate, % wt. | 0 | 5.0 | 6.0 | 8.0 | 10.0 |
| HDT (°C), 1.82 MPa | 172 | 171 | 169 | 165 | 162 |
| UL—94, ⅛", 3,18 mm | V—2 | V—0 | V—0 | V—0 | V—0 |
| UL—94, 1/16", 1,59 mm | failed | V—0 | V—0 | V—0 | V—0 |
| UL—94, 5V, ⅛", 3,18 mm | failed | passed | passed | passed | passed |
| Impact strength, Izod | | | | | |
| Unnotched, J/m ⅛", 3,18 mm | 1567 | 1550 | 1543 | 1547 | 1588 |
| Unnotched, J/m ¼", 6,35 mm | 819 | 813 | 808 | 818 | 839 |
| Tensile yield strength, MPa | 72.1 | 74.0 | 73.2 | 73.6 | 74.0 |
| Flexural strength, MPa | 103.7 | 107.5 | 108.0 | 109.0 | 115.0 |
| Flexural Modulus, GPa | 2.48 | 2.50 | 2.49 | 2.68 | 2.75 |

In a preferred embodiment of the invention, an acrylic rubber interpolymer composite is introduced in the composition as described above.

Acrylic rubber interpolymer composites are described in U.S. Patents 3,808,180 and 4,096,202. Briefly, the technology described therein is that of the preparation of a specific class of multiphase compounds termed impact modifiers.

The impact modifier is a multiphase composite interpolymer comprising 25 to 95 weight percent of a first elastomeric phase and 75 to 5 weight percent of a final rigid thermoplastic phase. One or more intermediate phases are optional, for example, a middle stage polymerized from about 75 to 100 percent by weight styrene. The first stage is polymerized from about 75 to 99.8 weight percent n-butyl acrylate resulting in an acrylic rubber core having a Tg below about 10°C and cross-linked with 0.1 to 5 weight percent cross-linking monomer and, further, containing 0.1 to 5 percent by weight graft-linking monomer. The crosslinking monomer is a polyethylenically unsaturated monomer having a plurality of addition polymerizable reactive groups all of which polymerize at substantially the same rate of reaction. Suitable cross-linking monomers include polyacrylic and polymethacrylic esters of polyols such as butylene diacrylate and dimethacrylate, trimethylol propane trimethacrylate, and the like; di- and trivinyl benzene, vinyl acrylate and methacrylate, and the like. The preferred cross-linking monomer is butylene diacrylate. The graft-linking monomer is a polyethylenically unsaturated monomer having a plurality of addition polymerizable reactive groups, at least one of which polymerizing at a substantially different rate of polymerization from at least one other of said reactive groups. The function of the graft-linking monomer is to provide a residual level of unsaturation in the elastomeric phase, particularly in the latter stages of polymerization and, consequently, at or near the surface of the elastomer particles. When the rigid thermoplastic phase is subsequently polymerized at the surface of the elastomer, the residual unsaturated addition polymerizable reactive group contributed by the graft-linking monomer participates in the subsequent reaction so that at least a portion of the rigid phase is chemically attached to the surface of the elastomer. Among the effective graft-linking monomers are allyl group-containing monomers of allyl esters of ethylenically unsaturated acids such as allyl acrylate, allyl methacrylate, diallyl maleate, diallyl fumarate, diallyl itaconate, allyl acid maleate, allyl acid fumarate, and allyl acid itaconate. The preferred graft-linking monomers are allyl methacrylate and diallyl maleate. A most preferred interpolymer has only two stages, the first stage comprising about 60 to 95 percent by weight of the interpolymer and being polymerized from a monomer system comprising 95 to 99.8 percent by weight butyl acrylate, 0.1 to 2.5 percent by weight butylene diacrylate as cross-linking agent, 0.1 to 2.5 percent by weight allyl methacrylate or diallyl maleate as a graft-linking agent with a final stage polymerized from about 60 to 100 percent by weight methyl methacrylate.

The final stage rigid thermoplastic phase monomer system can be comprised of $C_1$ to $C_{16}$ methacrylate, styrene, acrylonitrile, alkyl acrylates, allyl methacrylate, diallyl methacrylate, and the like, as long as the over Tg is at least 20°C. Preferably, the final stage monomer system is at least 50 weight percent $C_1$ to $C_4$

alkyl methacrylate. It is further preferred that the final stage polymer be free of acid, hydroxyl amino and amide groups.

A certain such acrylic rubber interpolymer composite characterized in that acrylic rubber core is comprised of n-butyl acrylate and in that its crosslinking agent is 1,3-butylene diacrylate and in which the graft-linking agent is diallyl maleate and the second phase monomeric system of which is methyl methacrylate was discovered to have an unexpected and profound effect on the impact performance of the presently disclosed blends of polysulfone and polyphosphonates. The acrylic rubber interpolymer composite used in the course of the experiments described below is available under the trademark Acryloid® KM—330 from the Rohm and Haas Company of Philadelphia, Pennsylvania and may be characterized by the weight ratios of its constituents as follows: n-butyl acrylate/1.3 butylene diacrylate/diallyl maleate/methyl methacrylate = 79.2/0.4/0.4/20.0.

In the preferred practice of the invention a blend of polysulfone, polyphosphonate and acrylic rubber interpolymer composite was found to exhibit a surprising and unexpected high level of flame retardance coupled with an improved impact performance. The blend may contain from about 2 to about 20 percent, preferably 6 to 15 percent of the acrylic rubber interpolymer composite, about 50 to 97 percent of polysulfone and about 1 to 30 percent polyphosphonate. The percentages noted above are relative to the weight of the blend.

The Examples set out below will serve to demonstrate the preparation of the blends of the preferred embodiment of the invention and the properties of articles molded thereof.

Examples 11—15

Blends of polysulfone, polyphosphonate and acrylic rubber interpolymer composite were prepared by coextrusion at 270°C. The properties thereof are tabulated below and are compared to those of polysulfone resin, Udel® P 1700 and to those of a blend of polysulfone and polyphosphonate.

TABLE 3

| | 11 | 12 | 13 | 14 | 15 |
|---|---|---|---|---|---|
| Composition, wt. % | | | | | |
| polysulfone(1) | 100 | 94.0 | 84.0 | 80.0 | 78.0 |
| polyphosphonate(2) | — | 6.0 | 10.0 | 10.0 | 10.0 |
| interpolymer composite(3) | — | — | 6.0 | 10.0 | 12.0 |
| Properties | | | | | |
| Heat distortion temperature(4) °C (1.82 MPa) | 172 | 163 | 156 | 156 | 155 |
| Flammability rating, UL 94 | | | | | |
| ⅛", 3,18 mm | failed | V—0 | V—0 | V—0 | V—0 |
| 1/16", 1,59 mm | failed | V—0 | V—0 | V—0 | V—0 |
| 5V, ⅛", 3,18 mm | failed | passed | passed | passed | passed |
| Impact strength, Izod(5) (J/m) | | | | | |
| notched ⅛", 3,18 mm | 63 | 59 | 71 | 171 | 232 |
| notched ¼", 6,35 mm | 60 | 60 | 62 | 132 | 134 |
| unnotched ⅛", 3,18 mm | 1518 | 1530 | 1545 | 1556 | 1525 |
| unnotched ¼", 6.35 mm | 821 | 835 | 817 | 812 | 819 |
| Tensile strength, MPa | 72.8 | 74.0 | 57.0 | 51.0 | 46.0 |
| Flexural strength, MPa | 60.5 | 109.0 | 102.0 | 86.0 | 87.3 |
| Flexural modulus, GPa | 2.40 | 2.62 | 2.56 | 2.46 | 2.32 |

Footnotes:

(1)Udel® P 1700, a product by Union Carbide Corporation
(2)Poly-(4,4'-dioxydiphenyl)-methylphosphonate, having a relative viscosity of 1,404 as measured in a 0.5% solution in $CH_2Cl_2$ at 25°C
(3)Acryloid® KM—330, a product of Rohm and Haas Company
(4)Per ASTM D—648
(5)Per ASTM D—256

Examples 16—21

Blends comprising Udel® P 3500 polysulfone and an acrylic rubber interpolymer composite, Acryloid® KM 330 were prepared by coextrusion at 290°C and compared to (Example 21) a ternary blend where ABS (ABSON 822 from Mobay Chemical Corporation) was substituted for Acryloid® KM 330. The properties of these, set in comparison to those of polysulfone (Example 16) and of a binary blend of polysulfone and polyphosphonate are tabulated below.

TABLE 4

| | 16 | 17 | 18 | 19 | 20 | 21 |
|---|---|---|---|---|---|---|
| Composition, wt. % | | | | | | |
| polysulfone(1) | 100 | 95.0 | 80.0 | 79.0 | 77.0 | 78.0 |
| polyphosphonate(2) | — | 5.0 | 9.0 | 9.0 | 10.0 | 10.0 |
| interpolymer composite(3) | — | 0 | 11.0 | 12.0 | 13.0 | — |
| ABS(4) | — | — | — | — | — | 12.0 |
| Properties | | | | | | |
| Heat distortion temperature °C at 1.82 MPa(5) | 172 | 171 | 161 | 159 | 158 | 159 |
| Flammability rating, UL 94 | | | | | | |
| ⅛", 3,18 mm | V—2 | V—0 | V—0 | V—0 | V—0 | V—0 |
| 1/16", 1,59 mm | failed | V—0 | V—0 | V—0 | V—0 | V—1 |
| UL—94, 5V, ⅛", 3,18 mm | failed | passed | passed | passed | passed | failed |
| Impact strength, (J/m) (6) | | | | | | |
| notched ⅛", 3,18 mm | 68 | 64 | 193 | 235 | 248 | 49 |
| notched ¼", 6,35 mm | 65 | 53 | 179 | 200 | 212 | 44 |
| unnotched ⅛", 3,18 mm | 1567 | 1550 | 1460 | 1416 | 1481 | 681 |
| unnotched ¼", 6.35 mm | 819 | 813 | 805 | 800 | 801 | 550 |
| Tensile strength, MPa | 72.1 | 74.0 | 36.8 | 33.4 | 48.8 | 57.9 |
| Flexural strength, MPa | 103.7 | 107.5 | 93.1 | 87.2 | 86.5 | 101.7 |
| Flexural modulus, GPa | 2.48 | 2.50 | 2.29 | 2.17 | 2.10 | 2.52 |

(1)Udel® P 3500
(2)Poly-(4,4'-dioxydiphenyl)-methylphosphonate, having a relative viscosity of 1,404 as measured in a 0.5% solution in $CH_2Cl_2$ at 25°C
(3)Acryloid® KM—330
(4)ABSON 822 from Mobay Chemical Corporation; suspension ABS comprising 6—7% polybutadiene, 14—16% acrylonitrile and 76—78% styrene.
(5)Per ASTM D—648
(6)Per ASTM D—256

Although the invention has been described in detail in the foregoing examples for the purpose of illustration, it is to be understood that such detail is solely for that purpose and that variations can be made therein by those skilled in the art without departing from the spirit and scope of the invention as limited by the claims.

**Claims**

1. A molding composition comprising (a) 5—50% thermoplastic polyphosphonate having a number average molecular weight from 11000 to 220 000 characterized by the recurring structural units

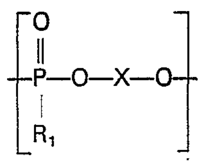

wherein $R_1$ denotes a member selected from the group consisting of $C_1$—$C_{12}$ alkyl, $C_2$—$C_{12}$ alkenyl, $C_6$—$C_{30}$ cycloalkyl, $C_6$—$C_{30}$ cycloalkenyl, $C_7$—$C_{30}$ arylalkyl and $C_8$—$C_{30}$ arylalkenyl wherein all aryl groups are unsubstituted or substituted by 1 to 5 $C_1$—$C_4$ alkyl groups and X is selected from the group consisting of phenylene, biphenylene, $C_1$—$C_4$ alkylene bis-phenylene, $C_5$—$C_{12}$ cycloalkylene bis-phenylene, thio-bis-phenylene, oxy-bis-phenylene, sulfonyl-bis-phenylene, carbonyl-bis-phenylene and naphthylene wherein any phenyl nucleus and naphthylene nucleus is either unsubstituted or substituted by a $C_1$—$C_4$ alkyl and in that the terminal members bound to the phosphorus are either of:

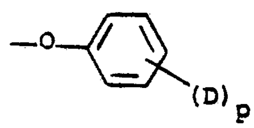 ;

—OH; —O—X—OH

and in that the terminal bound to the oxygen are any of:

H, 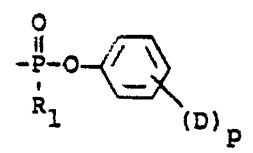 and 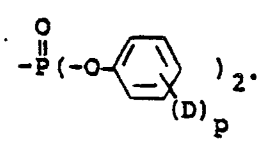

$R_1$ represents at least one of the radicals: $C_1$—$C_{12}$ alkyl; $C_2$—$C_{12}$ alkenyl; $C_6$—$C_{30}$ cycloalkyl, $C_6$—$C_{30}$ cycloalkenyl, $C_7$—$C_{30}$ arylalkyl or $C_8$—$C_{30}$ arylalkenyl, the aryl group in each case being unsubstituted or substituted by 1 to 5 $C_1$—$C_4$ alkyl groups; X represents at least one of the following radicals:

phenylene 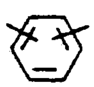

biphenylene 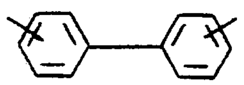

$C_1$—$C_4$ alkylene bis-phenylene 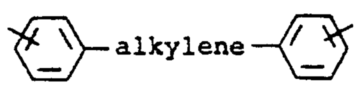

$C_5$—$C_{12}$ cycloalkylene bis-phenylene 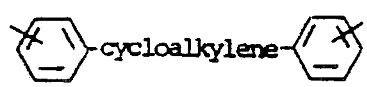

thio-bis-phenylene 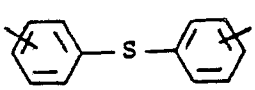

oxy-bis-phenylene 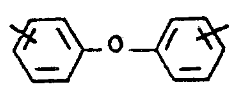

sulfonyl-bis-phenylene 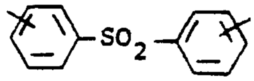

carbonyl-bis-phenylene 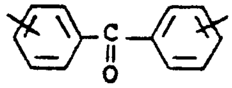 and

naphthylene 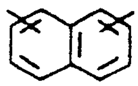

wherein each phenyl nucleus may be unsubstituted or substituted by 1 to 4 $C_1$—$C_4$ alkyl groups and wherein the naphthylene nucleus may be unsubstituted or substituted by 1 to 6 of at least one of the above-mentioned groups or atoms; D represents the same or different groups and represents a $C_1$—$C_4$ alkyl group and $p = 0$ or a number of from 1 to 5, preferably $p = 0$, and (b) 5—95% thermoplastic polyarylsulfone having a basic structure composed of recurring units of the formula

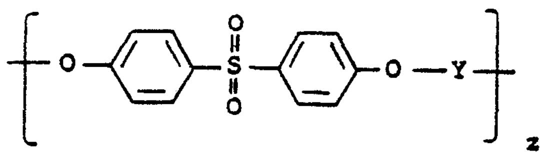

where Y is the radical residuum of a dihydric polynuclear phenol having an aliphatic moiety in its backbone remaining after the removal of both OH groups and z is an integer denoting the degree of polymerization and has a value greater than 50.

2. The composition of claim 1 wherein said $R_1$ is methyl.

3. The composition of claim 1 or 2 wherein said X is diphenyl.

4. A molding composition according to claim 1 comprising

a) a thermoplastic polysulfone characterized by the recurring structural units:

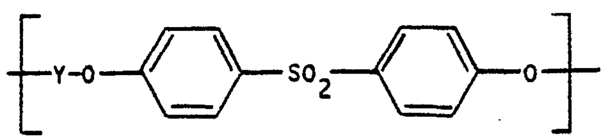

wherein Y is a radical residuum of a dihydric polynuclear phenol having an aliphatic moiety in its backbone and

b) a polyphosphonate characterized by the recurring structural units:

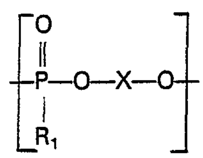

wherein $R_1$ denotes a member selected from the group consisting of $C_1$—$C_{12}$ alkyl, $C_2$—$C_{12}$ alkenyl, $C_6$—$C_{30}$ cycloalkyl, $C_6$—$C_{30}$ cycloalkenyl, $C_7$—$C_{30}$ arylalkyl and $C_8$—$C_{30}$ arylalkenyl wherein all aryl groups are unsubstituted or substituted by 1 to 5 $C_1$—$C_4$ alkyl groups and X is selected from the group consisting of phenylene, biphenylene, $C_1$—$C_4$ alkylene bis-phenylene, $C_5$—$C_{12}$ cycloalkylene bis-phenylene, thio-bis-phenylene, oxy-bis-phenylene, sulfonyl-bis-phenylene, carbonyl-bis-phenylene and naphthylene wherein any phenyl nucleus and naphthylene nucleus is either unsubstituted or substituted by a $C_1$—$C_4$ alkyl and additionally

c) an acrylic rubber interpolymer composite comprising

i) 25 to 95 percent by weight of a first elastomeric phase polymerized from a monomer system comprising 75 to 99.8 percent by weight n-butyl acrylate, 0.1 to 5 percent by weight crosslinking member, 0.1 to 5 percent by weight graft-linking monomer, and

ii) 75 to 5 percent of a second rigid thermoplastic phase polymerized in the presence of said elastomeric phase, optionally middle-stage polymerized from 75 to 100% by weight styrene.

5. The molding composition of Claim 4 wherein said polysulfone is present in an amount of 50 to 97 percent, said polyphosphonate is present in an amount of 1 to 30 percent and said acrylic rubber interpolymer composite is present in an amount of 2 to 20 percent, said percents being relative to the weight of said ternary composition.

6. The molding composition of Claim 4 or 5 wherein said cross-linking member is 1,3-butylene diacrylate, said graft-linking member is diallyl maleate and said second, rigid thermoplastic phase is methyl methacrylate.

7. The molding composition of Claim 6 wherein said butyl acrylate, 1,3-butylene diacrylate, diallyl maleate and methyl methacrylate relate to each other, by weight, as 79.2 to 0.4 to 0.4 to 20.0.

**Patentansprüche**

1. Formmasse, umfassend

(a) 5 bis 50% eines thermoplastischen Polyphosphonats mit einem Zahlenmittel des Molekulargewichts von 11 000 bis 220 000, das durch die wiederkehrenden Struktureinheiten

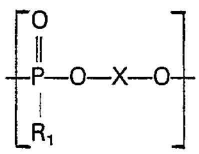

gekennzeichnet ist, worin

$R_1$ eine Verbindung bezeichnet, die aus der aus $C_1$—$C_{12}$-Alkyl, $C_2$—$C_{12}$-Alkenyl, $C_6$—$C_{30}$-Cycloalkyl, $C_6$—$C_{30}$-Cycloalkenyl, $C_7$—$C_{30}$-Arylalkyl und $C_8$—$C_{30}$-Arylalkenyl bestehenden Gruppe ausgewählt ist, wobei sämtliche Aryl-Gruppen unsubstituiert oder mit 1 bis 5 $C_1$—$C_4$-Alkyl-Gruppen substituiert sind, und

X aus der aus Phenylen, Biphenylen, $C_1$—$C_4$-Alkylen-bis-phenylen, $C_5$—$C_{12}$-Cycloalkylen-bis-phenylen, Thio-bis-phenylen, Oxy-bis-phenylen, Sulfonyl-bis-phenylen, Carbonyl-bis-phenylen und Naphthylen bestehenden Gruppe ausgewählt ist, wobei sämtliche Phenyl- und Naphthylen-Kerne entweder unsubstituiert oder durch ein $C_1$—$C_4$-Alkyl substituiert sind,

und daß die an den Phosphor gebundenen endständigen Gruppen jeweils Gruppen

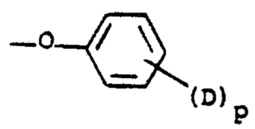 ;

—OH; —O—X—OH

sind und daß die an den Sauerstoff gebundenen endständigen Gruppen beliebige Gruppen

H, 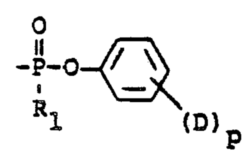 und 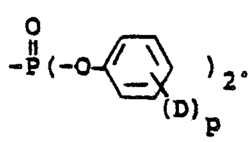

sind,

$R_1$ wenigstens einen der nachstehenden Reste bezeichnet: $C_1$—$C_{12}$-Alkyl, $C_2$—$C_{12}$-Alkenyl, $C_6$—$C_{30}$-Cycloalkyl, $C_6$—$C_{30}$-Cycloalkenyl, $C_7$—$C_{30}$-Arylalkyl oder $C_8$—$C_{30}$-Arylalkenyl, wobei die Aryl-Gruppe in jedem Falle unsubstituiert oder mit 1 bis 5 $C_1$—$C_4$-Alkyl-Gruppen substituiert ist,

X wenigstens einen der folgenden Reste bezeichnet:

Phenylen 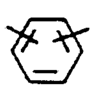

Biphenylen 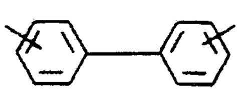

$C_1$—$C_4$-Alkylen-bis-phenylen 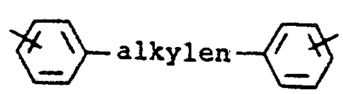

$C_5$—$C_{12}$-Cycloalkylen-bis-phenylen 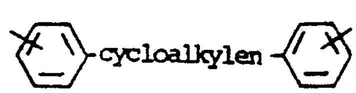

Thio-bis-phenylen 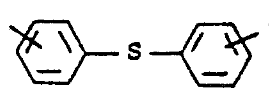

Oxy-bis-phenylen 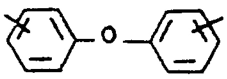

Sulfonyl-bis-phenylen 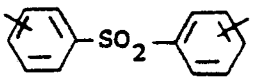

Carbonyl-bis-phenylene 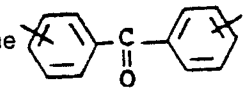 und

Naphthylen 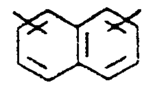

wobei jeder Phenyl-Kern unsubstituiert oder mit 1 bis 4 $C_1$—$C_4$-Alkyl-Gruppen substituiert sein kann und wobei der Naphthylen-Kern unsubstituiert oder durch 1 bis 6 wenigstens einer der oben genannten Gruppen oder Atome substituiert sein können,

D gleiche oder unterschiedliche Gruppen bezeichnet und für $C_1$—$C_4$-Alkyl-Gruppen steht und

p 0 oder eine Zahl von 1 bis 5 ist, wobei vorzugsweise p = 0,

und

(b) 5 bis 95% eines thermoplastischen Polyarylsulfons mit einer Grundstruktur aus Repetiereinheiten der Formel

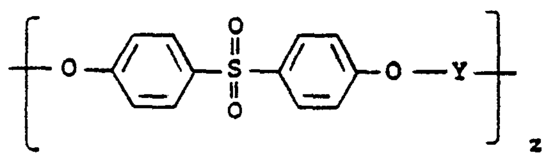

in der

Y der radikalische Rest eines zweiwertigen, mehrkernigen Phenols mit einer aliphatischen Struktureinheit in seinem Gerüst ist, der nach der Entfernung der beiden OH-Gruppen desselben verbleibt, und

z eine ganze Zahl ist, die den Polymerisationsgrad angibt und einen Wert größer als 50 hat.

2. Masse nach Anspruch 1, dadurch gekennzeichnet, daß $R_1$ Methyl ist.

3. Masse nach Ansprüchen 1 oder 2, dadurch gekennzeichnet, daß X Diphenyl ist.

4. Formmasse nach Anspruch 1, umfassend

a) ein thermoplastisches Polysulfon, das durch die wiederkehrenden Struktureinheiten

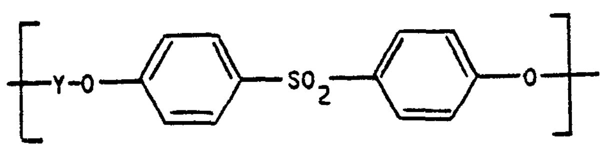

gekennzeichnet ist, in denen

Y der radikalische Rest eines zweiwertigen, mehrkernigen Phenols mit einer aliphatischen Struktureinheit in seinem Gerüst ist,

und

b) ein Polyphosphonat, das durch die wiederkehrenden Struktureinheiten

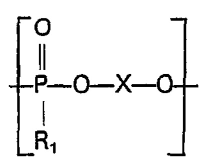

gekennzeichnet ist, in denen

$R_1$ eine Verbindung bezeichnet, die aus der aus $C_1$—$C_{12}$-Alkyl, $C_2$—$C_{12}$-Alkenyl, $C_6$—$C_{30}$-Cycloalkyl, $C_6$—$C_{30}$-Cycloalkenyl, $C_7$—$C_{30}$-Arylalkyl und $C_8$—$C_{30}$-Arylalkenyl bestehenden Gruppe ausgewählt ist, wobei sämtliche Aryl-Gruppen unsubstituiert oder mit 1 bis 5 $C_1$—$C_4$-Alkyl-Gruppen substituiert sind, und

X aus der aus Phenylen, Biphenylen, $C_1$—$C_4$-Alkylen-bis-phenylen, $C_5$—$C_{12}$-Cycloalkylen-bis-phenylen, Thio-bis-phenylen, Oxy-bis-phenylen, Sulfonyl-bis-phenylen, Carbonyl-bis-phenylen und Naphthylen

bestehenden Gruppe ausgewählt ist, wobei sämtliche Phenyl- und Naphthylen-Kerne entweder unsubstituiert oder durch ein $C_1$—$C_4$-Alkyl substituiert sind,

und zusätzlich

c) einen Acrylkautschuk-Interpolymer-Verbundstoff aus

i) 25 bis 95 Gew.-% einer ersten elastomeren Phase, die aus einem Monomer-System polymerisiert ist, das 75 bis 99,8 Gew.-% n-Butylacrylat, 0,1 bis 5 Gew.-% eines vernetzenden Gliedes und 0,1 bis 5 Gew.-% eines pfropfvernetzenden Monomers umfaßt, und

ii) 75 bis 5% einer zweiten starren thermoplastischen Phase, die in Gegenwart der elastomeren Phase polymerisiert ist, gegebenenfalls mittelstufen-polymerisiert aus 75 bis 100 Gew.-% Styrol.

5. Formmasse nach Anspruch 4, dadurch gekennzeichnet, daß das Polysulfon in einer Menge von 50 bis 97% vorliegt, das Polyphosphonat in einer Menge von 1 bis 30% vorliegt und der Acrylkautschuk-Interpolymer-Verbundstoff in einer Menge von 2 bis 20% vorliegt, wobei sämtliche Prozent-Angaben sich auf das Gewicht der ternären Zusammensetzung beziehen.

6. Formmasse nach Ansprüchen 4 oder 5, dadurch gekennzeichnet, daß das vernetzende Glied 1,3-Butylen-diacrylat ist, das pfropfvernetzende Glied Diallylmaleat ist und die zweite starre thermoplastische Phase Methylmethacrylat ist.

7. Formmasse nach Anspruch 6, dadurch gekennzeichnet, daß das Butylacrylat, das 1,3-Butylendiacrylat, das Diallylmaleat und das Methylmethacrylat relativ zueinander das Gewichtsverhältnis 79,2 : 0,4 : 0,4 : 20,0 bilden.

**Revendications**

1. Composition à mouler, comprenant (a) 5 à 50% d'un polyphosphonate thermoplastique ayant un poids moléculaire moyen en nombre compris entre 11 000 et 220 000, caractérisé par les motifs récurrents de structure:

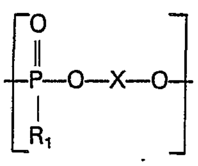

dans lesquels $R_1$ désigne un membre choisi dans l'ensemble constitué par un groupe alkyle en $C_1$—$C_{12}$, alcényle en $C_2$—$C_{12}$, cycloalkyle en $C_6$—$C_{30}$, cycloalcényle en $C_6$—$C_3$, arylalkyle en $C_7$—$C_{30}$ et arylalcényle en $C_8$—$C_{30}$, où tous les groupes aryle sont non substitués ou substitués par 1 à 5 groupes alkyle en $C_1$—$C_4$, et X est choisi dans l'ensemble constitué par un groupe phénylène, biphénylène, alkylène(en $C_1$—$C_4$)-bisphénylène, cycloalkylène(en $C_5$—$C_{12}$)bisphénylène, thiobisphénylène, oxybisphénylène, sulfonylbisphénylène, carbonylbisphénylène et naphtylène, chaque noyau phényle et chaque noyau naphtylène étant non substitués ou bien étant substitués par un groupe alkyle en $C_1$—$C_4$, et en ce que les parties terminales liées au phosphore sont choisies parmi:

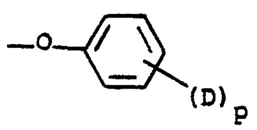 ;

—OH; —O—X—OH

et en ce que les parties terminales liées à l'oxygène sont choisies parmi:

H, 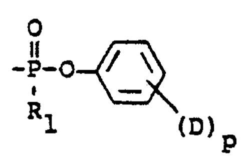 et 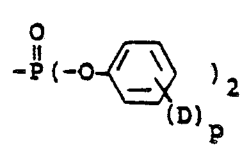.

$R_1$ représente au moins l'un des radicaux: alkyle en $C_1$—$C_{12}$, alcényle en $C_2$—$C_{12}$, cycloalkyle en $C_6$—$C_{30}$, cycloalcényle en $C_6$—$C_{30}$, arylalkyle en $C_7$—$C_{30}$ ou arylalcényle en $C_8$—$C_{30}$, le groupe aryle étant dans chaque cas non substitué ou bien substitué par 1 à 5 groupes alkyle en $C_1$—$C_4$;

X représente au moins l'un des radicaux suivants:

phénylène 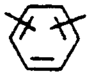

biphénylène 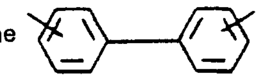

alkylène (en $C_1$—$C_4$)bis-phénylène 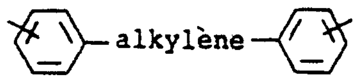

cycloalkylène(en $C_5$—$C_{12}$)bis-phénylène 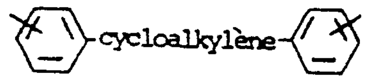

thio-bis-phénylène 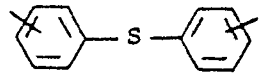

oxy-bis-phénylène 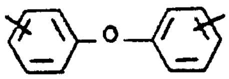

sulfonyl-bis-phénylène 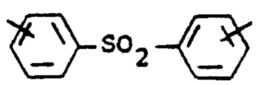

carbonyl-bis-phénylène 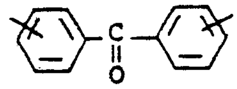 et

naphtylène 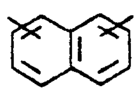

dans lesquels chaque noyau phényle peut être non substitué ou bien substitué par 1 à 4 groupes alkyles en $C_1$—$C_4$ et le noyau naphtylène peut être non substitué ou substitué par 1 à 6 d'au moins l'un des groupes ou atomes précités; D représente les groupes identiques ou différents et représente un groupe alkyle en $C_1$—$C_4$ et p est nul ou est un nombre valant 1 à 5, de préférence p = 0 et, (b) 5 à 95% d'une polyarylsulfone thermoplastique ayant une structure de base composée de motifs récurrents de formule:

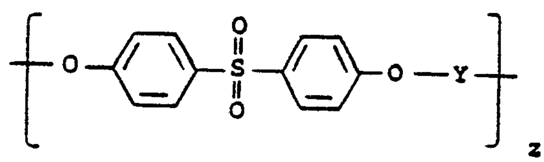

dans laquelle Y est le reste constitué par un radical d'un phénol polynucléaire dihydroxylé ayant un fragment aliphatique demeuré dans sa charpente après l'enlèvement des deux groupes OH, et z est un nombre entier indiquant le degré de polymérisation et qui a une valeur supérieure à 50.

2. Composition selon la revendication 1, dans laquelle $R_1$ est un groupe méthyle.

3. Composition selon la revendication 1 ou 2, dans laquelle X représente un radical diphényle.

4. Composition à mouler selon la revendication 1, comprenant

a) une polysulfone thermoplastique, caractérisée par les motifs récurrents de structure:

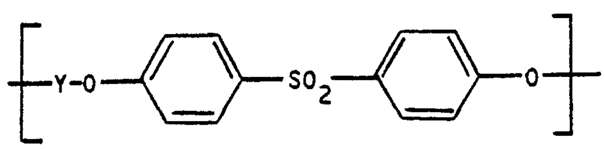

dans laquelle Y est un radical provenant d'un phénol polynucléaire dihydroxylé ayant un fragment aliphatique dans sa charpente, et

b) un polyphosphonate, caractérisé par les motifs récurrents de structure:

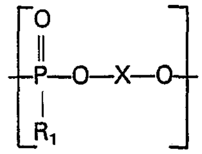

dans lesquels $R_1$ représente un membre choisi dans l'ensemble constitué par un groupe alkyle en $C_1$—$C_{12}$, alcényle en $C_2$—$C_{12}$, cycloalkyle en $C_6$—$C_{30}$, cycloalcényle en $C_6$—$C_{30}$, arylalkyle en $C_7$—$C_{30}$ et arylalcényle en $C_8$—$C_{30}$, dans lesquels tous les groupes aryles sont non substitués ou substitués par 1 à 5 groupes alkyle en $C_1$—$C_4$, et X est choisi dans l'ensemble formé par un radical phénylène, biphénylène, alkylene(en $C_1$—$C_4$)bisphénylène, cycloalkylène(en $C_5$—$C_{12}$)bisphénylène, thiobisphénylène, oxybisphénylène, sulfonylbisphénylène, carbonylbisphénylène et naphtylène, dont chaque noyau phényle et chaque noyau naphtylène est non substitué ou substitué par un groupe alkyle en $C_1$—$C_4$, et, en outre,

c) un interpolymère composite de caoutchouc acrylique comprenant:

i) 25 à 95% en poids d'une première phase élastomère obtenue par polymérisation d'un système monomère comprenant 75 à 99,8% en poids d'acrylate de n-butyle, 0,1 à 5% en poids d'un fragment pour réticulation, 0,1 à 5% en poids d'un monomère à rôle de greffage, et

ii) 75 à 5% d'une seconde phase thermoplastique rigide polymérisée en présence de ladite phase élastomère, et éventuellement un étage intermédiaire obtenu par polymérisation de 75 à 100% en poids de styrène.

5. Composition à mouler selon la revendication 4, dans laquelle ladite polysulfone est présente en une quantité de 50 à 97%, ledit polyphosphonate est présent en une quantité de 1 à 30% et ledit interpolymère composite de caoutchouc acrylique est présent en une quantité de 2 à 20%, lesdits pourcentages étant rapportés au poids de ladite composition ternaire.

6. Composition à mouler selon la revendication 4 ou 5, dans laquelle le fragment à rôle de réticulation est le 1,3-diacrylate de butylène, le fragment à rôle de greffage est le maléate de diallyle et ladite seconde phase thermoplasique rigide est formée de méthacrylate de méthyle.

7. Composition à mouler selon la revendication 6, dans laquelle le rapport pondéral entre lesdits acrylate de butyle, 1,3-diacrylate de butylène, maléate de diallyle et méthacrylate de méthyle est de 79,2 : 0,4 : 0,4 : 20,0.